# NEW EUROPEAN PATENT SPECIFICATION

(11) **EP 1 940 971 B2**
(45) Date of publication and mention of the opposition decision: **29.06.2022**
(45) Mention of the grant of the patent: 12.09.2012
(21) Application number: 06734845.8
(22) Date of filing: 10.02.2006
(51) Int. Cl.: C09D 5/36, C09D 5/03, C09D 11/02, C09C 1/00

(54) **MULTILAYER EFFECT PIGMENT**
MEHRSCHICHTEFFEKTPIGMENT
PIGMENT A EFFET MULTICOUCHE

(30) Priority: 12.02.2005 US 56560; 10.02.2006 US 351417
(43) Date of publication of application: 09.07.2008
(73) Proprietor: BASF Corporation, Florham Park, NJ 07932 (US)
(72) Inventor: FULLER, Daniel, J., Beacon, New York 12508 (US); ZIMMERMANN, Curtis, J., Cold Spring, New York 10516 (US)
(74) Representative: Altmann Stößel Dick Patentanwälte PartG mbB
(86) International application number: PCT/US2006/004890
(87) International publication number: WO 2006/088761

(56) References cited:
- EP-A- 1 281 732
- WO-A2-03/006558
- WO-A2-2006/088761
- US-A1- 2004 139 889
- PFAFF G ET AL: "Angle-Dependent Optical Effects Deriving from Submicron Structures of Films and Pigments" CHEMICAL REVIEWS, ACS,WASHINGTON, DC, US, vol. 99, no. 7, 1999, pages 1963-1981, XP002219038 ISSN: 0009-2665

## Description

### BACKGROUND OF THE INVENTION

Effect pigments, also known as pearlescent or nacreous pigments, are based on the use of a laminar substrate such as mica or glass flake which has been coated with a metal oxide layer. These pigments exhibit pearl-like luster as a result of reflection and refraction of light, and depending on the thickness of the metal oxide layer, they can also exhibit interference color effects.

Titanium dioxide-coated mica and iron oxide-coated mica effect pigments are the effect pigments which are encountered most often on a commercial basis. Pigments in which the metal oxide has been over-coated with another material are also well known in the art.

The commercially available effect pigments which contain only a single coating of a high refractive index material provide only two reflecting interfaces between materials. These two material interfaces (and reflections) are therefore solely responsible for the reflectivity achieved from the platelet surface. A substantial percentage of the incident light is thus transmitted through the platelet and while this is necessary to create the nacreous appearance of the pigment, it also diminishes other desirable properties of the effect pigments such as luster, chromaticity and hiding power. To counteract this consequence, the art has either mixed the effect pigments with other pigments or added additional layers of transparent and/or selectively absorbing materials onto the effect pigment.

Examples of prior art describing multi-coated effect pigments include JP 7-246366, WO 98/53011, WO 98/53012 and U.S. Pat. No. 4,434,010. All of such prior art requires that each coated layer possess an optical thickness equal to a whole number multiple of a one-quarter of the wavelength at which interference is expected. Such construction of the so-called quarter-wave stacks is a widely accepted and implemented condition in the thin-film industries. Because of this limitation, a unique layer thickness combination is essential in order to create each individual one of the interference colors of the visible spectrum. The base substrate is the only dimension common to all of the compositions displaying different interference colors.

WO03/006558A describes pigments based on glass flakes with a first layer coating having a refractive index > 1.8, a second layer coating having a refractive index ≤ 1.8, and a third layer coating having a refractive index > 1.8.

EP1281732A describes a multilayer interference pigment comprising a silica platelet substrate coated alternately with two or more layers of transparent materials having a refractive index above 1.8 and one or more layers with a refractive index of up to 1.8, where the optical thickness of the substrate is equal to that of the individual layers.

Pfaff G. and Reynders P. "Angle-Dependent Optical Effects Deriving from Submicron Structures of Films and Pigments" CHEMICAL REVIEWS, vol. 99, no. 7, 1999, pages 1963-1981, describes the use of computer simulations relating to pigments and its limitations.

It has now been discovered that the adherence to the quarter-wave stack approach is unnecessary and suitable products, even with substantial gains in luster, chromaticity and hiding power, can be achieved without observing that requirement. Further, numerous other advantages can be realized.

US2004/0139889A describes a multilayer effect pigment that includes a transparent substrate, a layer of high refractive index material on the substrate, and alternating layers of low refractive index and high refractive index materials on the first layer, the total number of layers being an odd number of at least three. The resulting multi-layer pigment is not a quarter-wave stack.

It is accordingly the object of this invention to provide a new multilayer effect pigment, including having improve luster, chromaticity and /or hiding power relative to other effect pigments.

### SUMMARY OF THE INVENTION

This invention relates to a yellow multilayer effect pigment as defined by the claim 1. This invention further relates to an orange multilayer effect pigment as defined by the claim 2. This invention furthermore relates to a red multilayer effect pigment as defined by the claims 3 and 6. This invention furthermore relates to a violet multilayer effect pigment as defined by the claim 4. This invention furthermore relates to a blue multilayer effect pigment as defined by the claim 5.

### DESCRIPTION OF THE INVENTION

In accordance with the present invention, a multilayer effect pigment consists of a transparent substrate having a layer of titanium dioxide thereon; a layer of silicon dioxide on said titanium dioxide layer; and an outermost titanium dioxide layer placed on said silicon dioxide layer, in which at least one of the layers has an optical thickness which is different from all of the other layers causing the pigment not to be a quarter-wave stack as defined by the claims.

The transparent substrate is a 1 micron thick natural or synthetic mica platelet substrate, 1 micron thick kaolin platelet substrate or 1 micron thick glass flake substrate. The substrate need not be totally transparent but should, preferably, have at least about 75% transmission. The size of the platelet shaped substrate is not critical per se and can be adapted to the particular use. Generally, the particles have largest major dimensions averaging about 5-250 microns, preferably 5-100 microns, and an aspect ratio greater than about 5. Their specific free surface area (BET) is, in general, from about 0.2 to 25 m²/g.

The layers encapsulating the substrate alternate between high refractive index materials and low refractive index materials. High refractive index materials include those with a refractive index from about 2.00 to about 3.10. Low refractive index materials include those with a refractive index from about 1.30 to about 1.80. The high refractive index materials may be anatase titanium dioxide or, rutile titanium dioxide.

The CRC Handbook of Chemistry and Physics, 63rd edition reports refractive indices for these high refractive index materials as follows.

| Material | Refractive Index |
|---|---|
| TiO2 - anatase | 2.55 |
| TiO2 - rutile | 2.90 |
| Fe2O3 - hematite | 3.01 |
| ZrO2 | 2.20 |
| ZnO | 2.03 |
| ZnS | 2.38 |
| BiOCl | 2.15 |

The low refractive index material is silicon dioxide.

The CRC Handbook of Chemistry and Physics, 63rd edition reports refractive indices for these low refractive index materials as follows.

| **Material** | **Refractive Index** |
|---|---|
| SiO2 - amorphous | 1.46 |
| MgF2 | 1.39 |
| Al2O3 | 1.76 |
| Polymers | 1.4 - 1.6 is typical |

The phrase "a transparent substrate having a layer of titanium dioxide thereon" as used herein means that the titanium dioxide is in direct contact with the transparent substrate

The individual layers can be applied to the substrate and to each other using techniques well known in the art. Any such technique can be utilized. One of the advantages of the invention is that sol-gel techniques can be used to apply the coatings. Such techniques are well known and widely practiced for thin film deposition, and are safe, economical and amenable to a wide variety of particle shapes and sizes. Chemical vapor deposition techniques which have been used in some prior art have a litany of negative aspects including safety hazards, expensive reagents and infrastructure and substrate particle size limitations. Monolithic web-based multilayer coating techniques have also been used in the prior art and suffer from the disadvantages that pigment particles are formed after the coatings are applied and therefore have discontinuities in the layers at the fracture points. The particles must also be classified according to size after the monolith is fractured, whereas in the present invention the particle size can be predetermined before the coating and can be constant.

Another advantage of the present invention is that the substrate and all layers have an appreciable degree of transparency and therefore the resulting pigments can exhibit unique angle dependent reflectivity ranging from nearly totally reflecting to substantially transmitting as the viewing angle is changed. Many multi-coated pigments in the prior art use metal flakes as substrates and such metal layers are not capable of transmitting light and the resulting pigment is therefore totally opaque.

Because the pigment is not a quarter-wave stack, the first layer which is adjacent the substrate can be given a fixed thickness and by varying the thickness of the other layers, it is possible to prepare all of the interference colors desired.

As described below, the thicknesses of each of the individual layers applied to the substrate are described as the optical thickness values. Optical thickness is the product of the actual physical or geometric thickness (t) of the layer and the refractive index (n) of the material of the layer. While it may be possible to measure the physical thickness of the deposited layer on the substrate, the refractive index of the applied material will vary from published values depending on the density and uniformity of the deposited layer. Typically, the tabulated values of refractive index are well known but such values are determined from a uniform and highly packed structure and are almost always higher than the refractive index values of the actual layers deposited via the techniques of this invention. Accordingly, it may be difficult to obtain the desired color by simply applying the respective materials at a prescribed physical thickness of the layer in as much as the refractive index may vary widely depending on the density and uniformity of the coating. However, the optical thickness can be indirectly determined by measuring the wavelengths at which interferences occur in the sample and then solving for "nt" in the well-known constructive interference and/or destructive interference equations. The equations as written below are for normal angle incidence of light only, in which the cosine θ term reduces to 1 and does not need to appear, in the interest of simplifying the present discussion.

Constructive interference equation: nt=m λ/4 where in m=odd integer
n = refractive index of the film material
t = geometric (physical) thickness of the film material, in nanometers
λ = the wavelength of maximum reflection, in nanometers
nt = optical thickness of the film material, in nanometers

Destructive interference equation: nt=m λ/2 where in m=any positive integer λ = the wavelength of minimum reflection, in nanometers

By measuring the interference wavelength λ from samples having the desired color after each layer deposition, the optical thickness of each layer can be readily determined. It is important to note that in this invention, the optical thicknesses of all the layers are not the same and as such, the pigment of the present invention does not represent the typical quarter wave stack. A layer having the appropriate whole integer multiple for the coefficient "m" in the equations is considered to possess the same optical thickness as the m = 1 case, and therefore construction of a stack of layers in which the integer m is varied at a constant λ is still considered a quarter-wave stack based on its function. This practice is therefore avoided in this invention. Surprisingly, it has been found that non-quarter wave stack pigments can yield desired colors contrary to what was long considered in the art, that the optical thicknesses of all the layers had to be the same.

While the approach of using a universal substrate/first layer/second layer base yields products superior to single-layer TiO₂-coated substrates, optimum pigments of this invention can be derived by employing a variety of unique optical thickness combinations. Examples of such products are provided in Table 2 below.

It is further part of the present invention that the pigments have first titanium dioxide and outermost titanium dioxide layers which have different optical thicknesses from each other and still yield the unexpected color which has been achieved by these materials which do not follow the standard quarter-wave theory. Moreover, the TiO₂ layers may have the same optical thickness. In such case, it is the optical thickness of the low refractive index layer, e.g., SiO₂, which provides the non-quarter wave stack. The most useful pigments of this invention will have a chromacity (0° C*) of at least 40.0.

The products of the present invention can be used in any application where pearlescent pigments have been used heretofore. Thus, the products of this invention have an unlimited use in all types of automotive and industrial paint applications, especially in the organic color coating and inks field where deep color intensity is required. For example, these pigments can be used in mass tone or as styling agents to spray paint all types of automotive and non-automotive vehicles. Similarly, they can be used on all clay/formica/wood/glass/metal/enamel/ceramic and non-porous or porous surfaces. The pigments can be used in powder coating compositions. They can be incorporated into plastic articles geared for the toy industry or the home. These pigments can be impregnated into fibers to impart new and esthetic coloring to clothes and carpeting. They can be used to improve the look of shoes, rubber and vinyl/marble flooring, vinyl siding, and all other vinyl products. In addition, these colors can be used in all types of modeling hobbies.

The above-mentioned compositions in which the compositions of this invention are useful are well known to those of ordinary skill in the art. Examples include printing inks, nail enamels, lacquers, thermoplastic and thermosetting materials, natural resins and synthetic resins. Some non-limiting examples include polystyrene and its mixed polymers, polyolefins, in particular, polyethylene and polypropylene, polyacrylic compounds, polyvinyl compounds, for example polyvinyl chloride and polyvinyl acetate, polyesters and rubber, and also filaments made of viscose and cellulose ethers, cellulose esters, polyamides, polyurethanes, polyesters, for example polyglycol terephthalates, and polyacrylonitrile.

For a well-rounded introduction to a variety of pigment applications, see Temple C. Patton, editor, The Pigment Handbook, volume II, Applications and Markets, John Wiley and Sons, New York (1973). In addition, see for example, with regard to ink: R. H. Leach, editor, The Printing Ink Manual, Fourth Edition, Van Nostrand Reinhold (International) Co. Ltd., London (1988), particularly pages 282-591; with regard to paints: C. H. Hare, Protective Coatings, Technology Publishing Co., Pittsburgh (1994), particularly pages 63-288. The foregoing references are of interest for their teachings of ink, paint and plastic compositions, formulations and vehicles in which the compositions of this invention may be used including amounts of colorants. For example, the pigment may be used at a level of 10 to 15% in an offset lithographic ink, with the remainder being a vehicle containing gelled and ungelled hydrocarbon resins, alkyd resins, wax compounds and aliphatic solvent. The pigment may also be used, for example, at a level of 1 to 10% in an automotive paint formulation along with other pigments which may include titanium dioxide, acrylic lattices, coalescing agents, water or solvents. The pigment may also be used, for example, at a level of 20 to 30% in a plastic color concentrate in polyethylene.

In the cosmetic and personal care field, these pigments can be used in the eye area and in all external and rinse-off applications. They are restricted only for the lip area. Thus, they can be used in hair sprays, face powder, leg-makeup, insect repellent lotion, mascara cake/cream, nail enamel, nail enamel remover, perfume lotion, and shampoos of all types (gel or liquid). In addition, they can be used in shaving cream (concentrate for aerosol, brushless, lathering), skin glosser stick, skin makeup, hair groom, eye shadow (liquid, pomade, powder, stick, pressed or cream), eye liner, cologne stick, cologne, cologne emollient, bubble bath, body lotion (moisturizing, cleansing, analgesic, astringent), after shave lotion, after bath milk and sunscreen lotion.

In order to further illustrate the invention, various examples are set forth below. In these examples, as well as throughout this specification and claims, all parts and percentages are by weight and all temperatures are in degrees Centigrade, unless otherwise indicated.

### EXAMPLE 1

Into a 1 liter Morton flask is added a solution of 420 ml of isopropanol, 32 ml of distilled water and 4 ml of a 29% NH₄OH aqueous solution. To this stirred solution is added 300 grams of a white reflecting TiO₂ coated glass flake powder (G130L, Reflecks Pinpoints of Pearl, Engelhard Corporation). The resulting suspension is stirred and heated to 60° C.

A charge of 33.2 grams of tetraethoxysilane is added to the suspension, which is stirred for 18 hours. The suspension is then vacuum filtered, and the presscake dried in a 120° C. oven for 16 hours. The yield of the dried product is 307.4 grams, and the bulk color is a weak red which is not visible in the reaction suspension.

Into a 2 liter Morton flask equipped with heaving, stirring, and temperature control is added 550 ml of demineralized water and 278 grams of silica coated intermediate prepared above. The stirring suspension pH is adjusted to 1.5, and the temperature set at 79° C. While maintaining the pH at 1.5, 16.7 grams of an 18% SnCl₄5H₂O solution is added at a constant rate over 60 minutes, and then the suspension is stirred at the temperature and pH set points for 30 minutes beyond the addition. While maintaining the pH at 1.5, and the temperature at 79° C., 50 ml of a 40% TiCl₄ aqueous solution is then added over 60 minutes. The suspension is filtered, and the presscake rinsed with water and dried for 16 hours at 120° C. The yield of final product is 315 grams.

A small portion (5 grams) of the final TiO₂ coated product is calcined at 600° C. for 20 minutes. Both the 120° C. dried product and the 600° C. calcined product is compared to the singly coated starting material (G130L, Engelhard Corporation) as drawdowns of 12% powder in nitrocellulose lacquer. The reflectivity of all the samples is evaluated both visually and instrumentally. A large increase in the reflectivity is imparted to the G130L starting material by the application of the 2 additional coatings.

### EXAMPLE 2

Into a 2 liter Morton flask is added a solution of 900 ml of isopropanol, 190 ml of distilled water, and 17 ml of a 29% NH₄OH aqueous solution. To this stirred solution is added 300 grams of a white reflecting TiO₂ coated mica powder (Timica Sparkle.TM., 110P, Engelhard Corporation).

A charge of 176.8 grams of tetraethoxysilane is added to the 60° C. suspension, which is stirred for 18 hours. The suspension is then vacuum filtered, and the presscake dried at 120° C. for 16 hours. The yield of silica coated product is 355 grams. The material displays a weak red reflection color in bulk form, which is not visible in the reaction suspension.

Into a 3 liter Morton flask equipped with heating, stirring, and temperature control is added 1000 ml of demineralized water and 150 grams of the silica coated intermediate obtained from the previous coating procedure. While stirring at a constant rate, the suspension is heated to the 74° C. set point, and the pH was adjusted to 1.6. Next, 23.5 grams of an 18% SnCl₄5H₂O solution is pumped into the suspension over 15 minutes while maintaining the pH at 1.6. The suspension is allowed to stir for 30 minutes following the addition.

While maintaining the temperature, stirring rate and pH of the suspension at the values for the previous reagent addition, an aqueous solution of 40% TiCl₄ is added to the suspension at a rate of 0.65 ml per minute. During the addition, small aliquots of the suspension get spread onto a black glass plate to monitor the luster and color of the pigment platelets. After 100 ml of TiCl₄ solution is added, there is still no increase in the luster of the particles, the addition is terminated, and the suspension filtered and the product dried at 120° C. The yield of product is 170 grams. The product is compared to the singly coated starting material (Timica Sparkle) as a drawdown of 3% pigment in nitrocellulose lacquer. The dried paint displays inferior luster to the starting material, and severe particle agglomeration.

### EXAMPLE 3

A slurry of 420 grams of iron oxide coated borosilicate flake (G270L, REFLECKS^{™} Blazing Bronze, Engelhard Corporation), 590 mls. of isopropanol, 45 mls. of water, and 5.6 mls. of 29% NH₄OH solution is heated to 60° C. and stirred in a reaction vessel. Then, 46.5 grams of tetraethoxysilane is added to the slurry and stirred at that temperature for 20 hours. The slurry is vacuum-filtered and the product dried for 24 hours at 135° C., yielding 432.2 grams. A slurry of 416 grams of the aforementioned silica coated product in 756 mls. of water is stirred in a reaction vessel and heated to 79° C. The slurry pH is adjusted to 1.5. An aqueous solution containing 8.93 grams of SnCl₄5H₂O is pumped into the slurry over a 2 hour period while maintaining the pH at 1.5 with 10% Na₂CO₃ solution. After the addition is completed, the slurry temperature is raised to 82° C. and the pH is adjusted to 3.0 with 10% Na₂CO₃ solution. An aqueous 39% FeCl₃ solution is pumped in at 0.4 g/min while controlling the pH at 3.0 with the 10% Na₂CO₃ solution. The addition is stopped after 81.8 grams of the iron solution is added, and the slurry is then vacuum-filtered, the presscake washed with water, and then calcined for 90 minutes at 650° C.

Both the calcined product and base iron oxide-coated glass flake are compared as drawdowns of 12% powder in nitrocellulose lacquer. The calcined product is seen to exhibit a bronze shade with superior reflectivity and chromaticity to that of the base material.

### EXAMPLE 4

A slurry of 420 grams of titanium dioxide coated borosilicate flake (G130L, REFLECKS.TM. Pinpoints of Pearl, Engelhard Corporation), 590 mls. of isopropanol, 45 mls. of water, and 5.6 mls. of 29% NH₄OH solution is heated to 60° C. and stirred in a reaction vessel. Then, 46.5 grams of tetraethoxysilane is added to the slurry and stirred at that temperature for 20 hours. The slurry is vacuum-filtered and the product dried for 24 hours at 135° C., yielding 432.2 grams. A slurry is prepared with 416 grams of the aforementioned silica coated product in 756 mls. of water, stirred in a reaction vessel and heated to 79° C. The slurry pH is adjusted to 1.5. An aqueous solution containing 8.93 grams of SnCl₄5H₂O is pumped into the slurry over a 2 hour period while maintaining the pH at 1.5 with 10% Na₂CO₃ solution. After the addition is complete, the slurry temperature is raised to 82° C. and the pH adjusted to 3.0 with 10% Na₂CO₃ solution. An aqueous 39% FeCl₃ solution is pumped in at 0.4 g/min while controlling the pH at 3.0 with 10% Na₂CO₃ solution. The addition is stopped after 81.8 grams of the iron solution is added, and the slurry is vacuum-filtered, the presscake washed with water, and calcined for 90 minutes at 650° C.

Both the calcined product and base iron oxide-coated glass flake are compared as drawdowns of 12% powder in nitrocellulose lacquer. The calcined product is seen to exhibit a bronze shade with superior reflectivity and chromaticity to that of the base material.

### COMPARATIVE EXAMPLE 5

The following samples with non-zero layers represent computer simulations on the specific pigments described employing a 1 micron thick glass substrate. Samples with zero thicknesses for the silica layer and second TiO₂ layer are simulations of singly coated commercial pigments and serve as comparisons to the inventive samples. Samples 1 and 3 represent pigments that were prepared as described above. The actual properties measured and observed agreed with the simulated properties.

**TABLE 1**

| Sample No. | Target Color | First TiO₂ Layer, Nm¹ | Silica Layer, Nm² | Second TiO₂ Layer, Nm¹ | L* | a* | b* |
|---|---|---|---|---|---|---|---|
| 1 | White | 148 | 117 | 136 | 90.6 | -2.6 | 0.2 |
| 2 | White | 148 | 0 | 0 | 75.5 | 0.6 | 0.4 |
| 3 | Yellow | 148 | 117 | 208 | 84.2 | -1.2 | 54.0 |
| 4 | Yellow | 208 | 0 | 0 | 64.3 | 5.2 | 37.6 |
| 5 | Yellow³ | 165 | 165 | 165 | 84.3 | -4.0 | 67.5 |
| 6 | Red | 148 | 117 | 241 | 74.7 | 33.5 | -0.7 |
| 7 | Red | 241 | 0 | 0 | 51.4 | 28.3 | 0.1 |
| 8 | Violet | 148 | 58 | 308 | 57.1 | 54.0 | -53.3 |
| 9 | Violet | 265 | 0 | 0 | 44.6 | 36.2 | -36.7 |
| 10 | Blue | 148 | 58 | 343 | 59.0 | 1.1 | -56.3 |
| 11 | Blue | 305 | 0 | 0 | 51.7 | -0.3 | -45.4 |
| 12 | Green | 148 | 58 | 410 | 78.1 | -44.2 | 0.5 |
| 13 | Green | 374 | 0 | 0 | 70.9 | -19.1 | -0.5 |
| 14 | Green³ | 370 | 370 | 370 | 72.1 | -58.8 | -1.2 |
| 1. ± 12 nm | | | | | | | |
| 2. ± 8 nm | | | | | | | |
| 3. ¼ wave pigment | | | | | | | |

The L*, a* and b* data are for normal incidence and specular reflection.

### EXAMPLE 6

The following data represent computer simulations on the specific pigments optimized with respect to C* magnitude and employing a 1 micron thick glass substrate. All samples represent pigments that were prepared by the sol-gel technique as described above. The actual properties measured and observed agreed with the simulated properties.

**TABLE 2**

| Sample No. | Target Color | First TiO₂ Layer, Nm¹ | Silica Layer, Nm² | Second TiO₂ Layer, Nm¹ | 0° L* | 0° a* | 0° b* | 0° C* |
|---|---|---|---|---|---|---|---|---|
| 1 | Yellow | 203 | 117 | 203 | 81.0 | 1.0 | 83.0 | 83.0 |
| 2 | Yellow | 203 | 58 | 227 | 80.0 | -3.0 | 75.0 | 75.1 |
| 3 | Orange | 243 | 58 | 243 | 64.0 | 32.0 | 34.0 | 46.7 |
| 4 | Red | 243 | 58 | 267 | 53.0 | 50.0 | 1.0 | 50.0 |
| 5 (not according to the invention) | Violet | 270 | 117 | 274 | 43.2 | 66.1 | - 24.9 | 70.6 |
| 6 | Blue | 143 | 58 | 72 | 47.0 | 3.0 | - 60.0 | 60.1 |
| 7 | Blue | 119 | 58 | 86 | 49.3 | 2.7 | - 59.2 | 59.3 |
| 1. ± 12 nm | | | | | | | | |
| 2. ± 8 nm | | | | | | | | |

### EXAMPLE 7

The following data represent computer simulations on specific pigments employing a 1 micron thick glass substrate.

**TABLE 3**

| Normal Color | First TiO₂ Layer, Nm¹ | Silica Layer, Nm² | Second TiO₂ Layer, Nm¹ | 0° L* | 0° a* | 0° b* | 0° C* |
|---|---|---|---|---|---|---|---|
| White (not according to the invention) | 134 | 117 | 134 | 90.7 | -6.0 | -0.2 | 6.00 |
| White (not according to the invention) | 134 | 114 | 136 | 90.7 | -6.2 | -0.1 | 6.20 |
| White (not according to the invention) | 134 | 111 | 138 | 90.7 | -6.6 | -0.1 | 6.60 |
| White (not according to the invention) | 134 | 108 1 | 141 | 90.6 | -6.9 | 0.03 | 6.90 |
| White (not according to the invention) | 134 | 105 | 143 | 90.5 | -7.2 | 0.13 | 7.20 |
| White (not according to the invention) | 134 | 102 | 143 | 90.3 | -7.7 | - 0.33 | 7.71 |
| White (not according to the invention) | 134 | 99 | 145 | 90.1 | -7.9 | - 0.27 | 7.91 |
| White (not according to the invention) | 134 | 96 | 148 | 89.9 | -8.2 | - 0.24 | 8.20 |
| White (not according to the invention) | 143 | 58 | 155 | 86.0 | - 10.0 | -1.0 | 10.0 |
| Yellow | 203 | 114 | 205 | 80.4 | 0.78 | 84.7 | 84.7 |
| Yellow | 203 | 111 | 208 | 80.2 | 1.15 | 85.7 | 85.7 |
| Yellow | 203 | 108 | 208 | 80.2 | 0.73 | 86.1 | 86.1 |
| Yellow | 203 | 105 | 210 | 80.3 | 0.35 | 86.2 | 86.2 |
| Yellow | 203 | 102 | 212 | 80.0 | 0.97 | 85.8 | 85.8 |
| Yellow | 203 | 99 | 212 | 80.0 | 0.70 | 85.5 | 85.5 |
| Yellow | 203 | 96 | 215 | 80.0 | 0.47 | 85.0 | 85.0 |
| Red | 243 | 117 | 248 | 49.0 | 57.0 | 3.0 | 57.1 |
| Red | 489 | 117 | 489 | 75.0 | 43.0 | 6.0 | 43.4 |
| Violet | 372 | 58 | 67 | 42.0 | 61.0 | - 64.0 | 88.4 |
| Violet | 143 | 58 | 45 | 31.0 | 55.0 | - 56.0 | 78.5 |
| Violet (not according to the invention) | 83 | 58 | 72 | 33.0 | 54.0 | - 51.0 | 74.3 |
| Violet | 95 | 58 | 72 | 30.0 | 60.0 | - 67.0 | 89.9 |
| Violet | 107 | 58 | 64 | 27.0 | 67.0 | - 71.0 | 97.6 |
| Violet | 265 | 117 | 265 | 38.0 | 71.0 | - 51.0 | 87.4 |
| Blue | 131 | 58 | 79 | 48.3 | 2.6 | - 60.3 | 60.4 |
| Green (not according to the invention) | 374 | 117 | 374 | 77.8 | - 59.8 | 0.2 | 59.8 |
| Green (not according to the invention) | 372 | 58 | 417 | 71.0 | - 45.0 | -2.0 | 45.0 |
| 1. ± 12 nm | | | | | | | |
| 2. ± 8 nm | | | | | | | |

### EXAMPLE 8

The pigment of this invention can be formulated into a powder eye shadow by thoroughly blending and dispersing the following materials:

| **Ingredients** | **Wt. Parts** |
|---|---|
| Mearltalc TCA^{®} (Talc) | 18 |
| Mearlmica^{®} SVA (Mica) | 20 |
| Magnesium Myristate | 5 |
| Silica | 2 |
| Cloisonne^{®} Red 424C (Red TiO₂-coated mica) | 20 |
| Cloisonne^{®} Violet 525C (Violet TiO₂-coated mica) | 13 |
| Cloisonne^{®} Nu-Antique Blue 626CB (TiO₂-coated mica/iron oxide-coated mica) | 2 |
| Cloisonne^{®} Cerise Flambé 550Z (iron oxide-coated mica) | 2 |
| Preservatives & Antioxidant | q.s. |

Then 7 parts of octyl palmitate and 1 part of isostearyl neopentanoate are heated and mixed until uniform, at which time the resulting mixture is sprayed into the dispersion and the blending continued. The blended material is pulverized and then 5 parts of Cloisonne Red 424C and 5 parts of the pigment of this invention added and mixed until a uniform powder eye shadow is obtained.

### EXAMPLE 9

The pigment can be formulated into a lipstick by placing the following amounts of the listed ingredients into a heated vessel and raising the temperature to 85.+-.3° C.:

| **Ingredients** | **Wt. Parts** |
|---|---|
| Candelilla Wax | 2.75 |
| Carnauba Wax | 1.25 |
| Beeswax | 1.00 |
| Ceresine Wax | 5.90 |
| Ozokerite Wax | 6.75 |
| Microcrystalline Wax | 1.40 |
| Oleyl Alcohol | 3.00 |
| Isostearyl Palmitate | 7.50 |
| Isostearyl Isostearate | 5.00 |
| Caprylic/Capric Triglyceride | 5.00 |
| Bis-Diglycerylpolyalcohol Adipate | 2.00 |
| Acetylated Lanolin Alcohol | 2.50 |
| Sorbitan Tristearate | 2.00 |
| Aloe Vera | 1.00 |
| Castor Oil | 37.50 |
| Red 6 Lake | 0.25 |
| Tocopheryl Acetate | 0.20 |
| Phenoxyethanol, Isopropylparaben, and butylparaben | 1.00 |
| Antioxidant | q.s. |

A mixture of 13 parts of the pigment of this invention and 1 part of kaolin are added and mixed until all of the pigment is well dispersed. Fragrance is added as desired and mixed with stirring. The resulting mixture is poured into molds at 75.+-.5° C., allowed to cool and flamed into lipsticks.

The various embodiments which were illustrated herein were set forth in order to illustrate the invention but were not intended to limit it.

## Claims

1. A multilayer effect pigment consisting of: a transparent substrate having a layer of titanium dioxide thereon; a layer of silicon dioxide on said titanium dioxide layer; and an outermost titanium dioxide layer placed on said silicon dioxide layer, wherein said inner titanium dioxide layer, said silicon dioxide layer, and the outermost titanium dioxide layer have optical thicknesses of
203 ± 12 nm, 117 ± 8 nm and 203 ± 12 nm respectively; or
203 ± 12 nm, 58 ± 8 nm and 227 ± 12 nm respectively; or
203 ± 12 nm, 114 ± 8 nm and 205 ± 12 nm respectively; or
203 ± 12 nm, 111 ± 8 nm and 208 ± 12 nm respectively; or
203 ± 12 nm, 108 ± 8 nm and 208 ± 12 nm respectively; or
203 ± 12 nm, 105 ± 8 nm and 210 ± 12 nm respectively; or
203 ± 12 nm, 102 ± 8 nm and 212 ± 12 nm respectively; or
203 ± 12 nm, 99 ± 8 nm and 212 ± 12 nm respectively; or
203 ± 12 nm, 96 ± 8 nm and 215 ± 12 nm respectively;
said pigment being yellow,
wherein the transparent substrate is a 1 micron thick natural or synthetic mica platelet substrate, 1 micron thick kaolin platelet substrate or 1 micron thick glass flake substrate.

2. A multilayer effect pigment comprising: a transparent substrate having a layer of titanium dioxide thereon; a layer of silicon dioxide on said titanium dioxide layer; and an outermost titanium dioxide layer placed on said silicon dioxide layer wherein said inner titanium dioxide layer has an optical thickness of 243 +- 12 nm, said silicon dioxide layer has an optical thickness of 58 +- 8 nm, and said outermost titanium dioxide layer has an optical thickness of 243 +- 12 nm, said pigment being orange.

3. A multilayer effect pigment consisting of: a transparent substrate having a layer of titanium dioxide thereon; a layer of silicon dioxide on said titanium dioxide layer; and an outermost titanium dioxide layer placed on said silicon dioxide layer wherein said inner titanium dioxide layer, said silicon dioxide layer, and said outermost titanium dioxide layer have optical thicknesses of
243 ± 12 nm, 58 ± 8 nm and 267 ± 12 nm respectively; or
243 ± 12 nm, 117 ± 8 nm and 248 ± 12 nm respectively;
said pigment being red,
wherein the transparent substrate is a 1 micron thick natural or synthetic mica platelet substrate, 1 micron thick kaolin platelet substrate or 1 micron thick glass flake substrate.

4. A multilayer effect pigment consisting of: a transparent substrate having a layer of titanium dioxide thereon; a layer of silicon dioxide on said titanium dioxide layer; and an outermost titanium dioxide layer placed on said silicon dioxide layer wherein said inner titanium dioxide layer, said silicon dioxide layer, and the outermost titanium dioxide layer have optical thicknesses of
372 ± 12 nm, 58 ± 8 nm and 67 ± 12 nm respectively; or
143 ± 12 nm, 58 ± 8 nm and 45 ± 12 nm respectively; or
95 ± 12 nm, 58 ± 8 nm and 72 ± 12 nm respectively; or
107 ± 12 nm, 58 ± 8 nm and 64 ± 12 nm respectively; or
265 ± 12 nm, 117 ± 8 nm and 265 ± 12 nm respectively;
said pigment being violet,
wherein the transparent substrate is a 1 micron thick natural or synthetic mica platelet substrate, 1 micron thick kaolin platelet substrate or 1 micron thick glass flake substrate.

5. A multilayer effect pigment consisting of: a transparent substrate having a layer of titanium dioxide thereon; a layer of silicon dioxide on said titanium dioxide layer; and an outermost titanium dioxide layer placed on said silicon dioxide layer wherein said inner titanium dioxide layer, said silicon dioxide layer, and the outermost titanium dioxide layer have optical thicknesses of
143 ± 12 nm, 58 ± 8 nm and 72 ± 12 nm respectively; or
119 ± 12 nm, 58 ± 8 nm and 86 ± 12 nm respectively; or
131 ± 12 nm, 58 ± 8 nm and 79 ± 12 nm respectively;
said pigment being blue,
wherein the transparent substrate is a 1 micron thick natural or synthetic mica platelet substrate, 1 micron thick kaolin platelet substrate or 1 micron thick glass flake substrate.

6. A multilayer effect pigment comprising: a transparent substrate having a layer of titanium dioxide thereon, said layer having a optical thickness of 489 +- 12 nm; a layer of silicon dioxide on said titanium dioxide layer, said silicon dioxide layer having an optical thickness of 117 +- 8 nm; and an outermost titanium dioxide layer placed on said silicon dioxide layer and having an optical thickness of 489 +- 12 nm, said pigment being red.

7. The multilayer effect pigment of any preceding claim, wherein said transparent substrate is glass flake.

8. A cosmetic comprising liquid or powder and said multilayer effect pigment of any of claims 1 to 5.

## Patentansprüche

1. Mehrschichteffektpigment, bestehend aus: ein transparentes Substrat mit einer Schicht aus Titandioxid darauf; eine Schicht aus Siliciumdioxid auf der Titandioxidschicht und eine äußerste Titandioxidschicht, die auf der Siliciumdioxidschicht angeordnet ist, wobei die innere Titandioxidschicht, die Siliciumdioxidschicht und die äußerste Titandioxidschicht die folgenden optischen Dicken aufweisen:
203 ± 12 nm, 117 ± 8 nm beziehungsweise 203 ± 12 nm; oder
203 ± 12 nm, 58 ± 8 nm beziehungsweise 227 ± 12 nm; oder
203 ± 12 nm, 114 ± 8 nm beziehungsweise 205 ± 12 nm; oder
203 ± 12 nm, 111 ± 8 nm beziehungsweise 208 ± 12 nm; oder
203 ± 12 nm, 108 ± 8 nm beziehungsweise 208 ± 12 nm; oder
203 ± 12 nm, 105 ± 8 nm beziehungsweise 210 ± 12 nm; oder
203 ± 12 nm, 102 ± 8 nm beziehungsweise 212 ± 12 nm; oder
203 ± 12 nm, 99 ± 8 nm beziehungsweise 212 ± 12 nm; oder
203 ± 12 nm, 96 ± 8 nm beziehungsweise 215 ± 12 nm;
wobei das Pigment gelb ist,
wobei das transparente Substrat ein 1 Mikrometer dickes natürliches oder synthetisches Glimmerplättchensubstrat, ein 1 Mikrometer dickes Kaolinplättchensubstrat oder ein 1 Mikrometer dickes Glasflockensubstrat ist.

2. Mehrschichteffektpigment, umfassend: ein transparentes Substrat mit einer Schicht aus Titandioxid darauf; einer Schicht aus Siliciumdioxid auf der Titandioxidschicht und einer äußersten Titandioxidschicht, die auf der Siliciumdioxidschicht angeordnet ist, wobei die innere Titandioxidschicht eine optische Dicke von 243 ± 12 nm aufweist, die Siliciumdioxidschicht eine optische Dicke von 58 ± 8 nm aufweist und die äußerste Titandioxidschicht eine optische Dicke von 243 ± 12 nm aufweist, wobei das Pigment orange ist.

3. Mehrschichteffektpigment, bestehend aus: ein transparentes Substrat mit einer Schicht aus Titandioxid darauf; eine Schicht aus Siliciumdioxid auf der Titandioxidschicht und eine äußerste Titandioxidschicht, die auf der Siliciumdioxidschicht angeordnet ist, wobei die innere Titandioxidschicht, die Siliciumdioxidschicht und die äußerste Titandioxidschicht die folgenden optischen Dicken aufweisen:
243 ± 12 nm, 58 ± 6 nm beziehungsweise 267 ± 12 nm; oder
243 ± 12 nm, 117 ± 8 nm beziehungsweise 248 ± 12 nm;
wobei das Pigment rot ist,
wobei das transparente Substrat ein 1 Mikrometer dickes natürliches oder synthetisches Glimmerplättchensubstrat, ein 1 Mikrometer dickes Kaolinplättchensubstrat oder ein 1 Mikrometer dickes Glasflockensubstrat ist.

4. Mehrschichteffektpigment, bestehend aus: ein transparentes Substrat mit einer Schicht aus Titandioxid darauf; eine Schicht aus Siliciumdioxid auf der Titandioxidschicht und eine äußerste Titandioxidschicht, die auf der Siliciumdioxidschicht angeordnet ist, wobei die innere Titandioxidschicht, die Siliciumdioxidschicht und die äußerste Titandioxidschicht die folgenden optischen Dicken aufweisen:
372 ± 12 nm, 58 ± 8 nm beziehungsweise 67 ± 12 nm; oder
143 ± 12 nm, 58 ± 8 nm beziehungsweise 45 ± 12 nm; oder
95 ± 12 nm, 58 ± 8 nm beziehungsweise 72 ± 12 nm; oder
107 ± 12 nm, 58 ± 8 nm beziehungsweise 64 ± 12 nm; oder
265 ± 12 nm, 117 ± 8 nm beziehungsweise 265 ± 12 nm;
wobei das Pigment violett ist,
wobei das transparente Substrat ein 1 Mikrometer dickes natürliches oder synthetisches Glimmerplättchensubstrat, ein 1 Mikrometer dickes Kaolinplättchensubstrat oder ein 1 Mikrometer dickes Glasflockensubstrat ist.

5. Mehrschichteffektpigment, bestehend aus: ein transparentes Substrat mit einer Schicht aus Titandioxid darauf; eine Schicht aus Siliciumdioxid auf der Titandioxidschicht und eine äußerste Titandioxidschicht, die auf der Siliciumdioxidschicht angeordnet ist, wobei die innere Titandioxidschicht, die Siliciumdioxidschicht und die äußerste Titandioxidschicht die folgenden optischen Dicken aufweisen:
143 ± 12 nm, 58 ± 8 nm beziehungsweise 72 ± 12 nm; oder
119 ± 12 nm, 58 ± 8 nm beziehungsweise 86 ± 12 nm; oder
131 ± 12 nm, 58 ± 8 nm beziehungsweise 79 ± 12 nm;
wobei das Pigment blau ist,
wobei das transparente Substrat ein 1 Mikrometer dickes natürliches oder synthetisches Glimmerplättchensubstrat, ein 1 Mikrometer dickes Kaolinplättchensubstrat oder ein 1 Mikrometer dickes Glasflockensubstrat ist.

6. Mehrschichteffektpigment, umfassend: ein transparentes Substrat mit einer Schicht aus Titandioxid darauf, wobei die Schicht eine optische Dicke von 489 ± 12 nm aufweist; eine Schicht aus Siliciumdioxid auf der Titandioxidschicht, wobei die Siliciumdioxidschicht eine optische Dicke von 117 ± 8 nm aufweist, und eine äußerste Titandioxidschicht, die auf der Siliciumdioxidschicht angeordnet ist und eine optische Dicke von 489 ± 12 nm aufweist, wobei das Pigment rot ist.

7. Mehrschichteffektpigment nach einem der vorhergehenden Ansprüche, wobei das transparente Substrat Glasschuppen ist.

8. Kosmetikum, das Flüssigkeit oder Pulver und das Mehrschichteffektpigment nach einem der Ansprüche 1 bis 5 umfasst.

## Revendications

1. Pigment à effet multicouche constitué de: un substrat transparent recouvert d'une couche de dioxyde de titane ; une couche de dioxyde de silicium au-dessus de ladite couche de dioxyde de titane; et une couche de dioxyde de titane la plus externe placée sur ladite couche de dioxyde de silicium, ladite couche de dioxyde de titane interne, ladite couche de dioxyde de silicium et la couche de dioxyde de titane la plus externe ayant une épaisseur optique de
203 ± 12 nm, 117 ± 8 nm et 203 ± 12 nm respectivement; ou
203 ± 12 nm, 58 ± 8 nm et 227 ± 12 nm respectivement ; ou
203 ± 12 nm, 114 ± 8 nm et 205 ± 12 nm respectivement ; ou
203 ± 12 nm, 111 ± 8 nm et 208 ± 12 nm respectivement ; ou
203 ± 12 nm, 108 ± 8 nm et 208 ± 12 nm respectivement ; ou
203 ± 12 nm, 105 ± 8 nm et 210 ± 12 nm respectivement ; ou
203 ± 12 nm, 102 ± 8 nm et 212 ± 12 nm respectivement ; ou
203 ± 12 nm, 99 ± 8 nm et 212 ± 12 nm respectivement ; ou
203 ± 12 nm, 96 ± 8 nm et 215 ± 12 nm respectivement ;
ledit pigment étant jaune,
dans lequel le substrat transparent est un substrat de lamelles de mica naturel ou synthétique d'une épaisseur de 1 micron, un substrat de lamelles de kaolin d'une épaisseur de 1 micron ou un substrat de flocons de verre d'une épaisseur de 1 micron.

2. Pigment à effet multicouche comprenant : un substrat transparent recouvert d'une couche de dioxyde de titane ; une couche de dioxyde de silicium au-dessus de ladite couche de dioxyde de titane ; et une couche de dioxyde de titane la plus externe placée sur ladite couche de dioxyde de silicium, ladite couche de dioxyde de titane interne ayant une épaisseur optique de 243 ± 12 nm, ladite couche de dioxyde de silicium layer ayant une épaisseur optique de 58 ± 8 nm, et ladite couche de dioxyde de titane la plus externe ayant une épaisseur optique de 243 ± 12 nm, ledit pigment étant orange.

3. Pigment à effet multicouche constitué de: un substrat transparent recouvert d'une couche de dioxyde de titane ; une couche de dioxyde de silicium au-dessus de ladite couche de dioxyde de titane ; et une couche de dioxyde de titane la plus externe placée sur ladite couche de dioxyde de silicium, ladite couche de dioxyde de titane interne, ladite couche de dioxyde de silicium et ladite couche de dioxyde de titane la plus externe ayant une épaisseur optique de
243 ± 12 nm, 58 ± 8 nm et 267 ± 12 nm respectivement ; ou
243 ± 12 nm, 117 ± 8 nm et 248 ± 12 nm respectivement ;
ledit pigment étant rouge,
dans lequel le substrat transparent est un substrat de lamelles de mica naturel ou synthétique d'une épaisseur de 1 micron, un substrat de lamelles de kaolin d'une épaisseur de 1 micron ou un substrat de flocons de verre d'une épaisseur de 1 micron.

4. Pigment à effet multicouche constitué de: un substrat transparent recouvert d'une couche de dioxyde de titane ; une couche de dioxyde de silicium au-dessus de ladite couche de dioxyde de titane ; et une couche de dioxyde de titane la plus externe placée sur ladite couche de dioxyde de silicium, ladite couche de dioxyde de titane interne, ladite couche de dioxyde de silicium et ladite couche de dioxyde de titane la plus externe ayant une épaisseur optique de
372 ± 12 nm, 58 ± 8 nm et 67 ± 12 nm respectivement ; ou
143 ± 12 nm, 58 ± 8 nm et 45 ± 12 nm respectivement ; ou
95 ± 12 nm, 58 ± 8 nm et 72 ± 12 nm respectivement ; ou
107 ± 12 nm, 58 ± 8 nm et 64 ± 12 nm respectivement ; ou
265 ± 12 nm, 117 ± 8 nm et 265 ± 12 nm respectivement ;
ledit pigment étant violet,
dans lequel le substrat transparent est un substrat de lamelles de mica naturel ou synthétique d'une épaisseur de 1 micron, un substrat de lamelles de kaolin d'une épaisseur de 1 micron ou un substrat de flocons de verre d'une épaisseur de 1 micron.

5. Pigment à effet multicouche constitué de: un substrat transparent recouvert d'une couche de dioxyde de titane; une couche de dioxyde de silicium au-dessus de ladite couche de dioxyde de titane ; et une couche de dioxyde de titane la plus externe placée sur ladite couche de dioxyde de silicium, ladite couche de dioxyde de titane interne, ladite couche de dioxyde de silicium et ladite couche de dioxyde de titane la plus externe ayant une épaisseur optique de
143 ± 12 nm, 58 ± 8 nm et 72 ± 12 nm respectivement ; ou
119 ± 12 nm, 58 ± 8 nm et 86 ± 12 nm respectivement ; ou
131 ± 12 nm, 58 ± 8 nm et 79 ± 12 nm respectivement ;
ledit pigment étant bleu,
dans lequel le substrat transparent est un substrat de lamelles de mica naturel ou synthétique d'une épaisseur de 1 micron, un substrat de lamelles de kaolin d'une épaisseur de 1 micron ou un substrat de flocons de verre d'une épaisseur de 1 micron.

6. Pigment à effet multicouche comprenant : un substrat de titane recouvert d'une couche de dioxyde de titane ; ladite couche ayant une épaisseur optique de 489 ± 12 nm ; une couche de dioxyde de silicium au-dessus de ladite couche de dioxyde de titane, ladite couche de dioxyde de silicium ayant une épaisseur optique de 117 ± 8 nm ; et une couche de dioxyde de titane la plus externe placée au-dessus de la couche de dioxyde de silicium et ayant une épaisseur optique de 489 ± 12 nm, ledit pigment étant rouge.

7. Pigment à effet multicouche de l'une quelconque des revendications précédentes, dans lequel le substrat est le flocon de verre.

8. Cosmétique comprenant un liquide ou une poudre et ledit pigment à effet multicouches de l'une quelconque des revendications 1 à 5.
